# EUROPEAN PATENT APPLICATION

(11) **EP 4 227 372 A1**
(43) Date of publication of application: **16.08.2023**
(21) Application number: 22190437.8
(22) Date of filing: 15.08.2022
(51) Int. Cl.: C09D 5/00, C09D 5/02

(54) **A WHITE PAINT COMPOSITION**

(30) Priority: 14.02.2022 US 202263309732 P
(71) Applicant: Vecor IP Holdings Limited, Kowloon, Tsimshatsui (HK)
(72) Inventor: MISA, John Vincent Adap, Tsimshatsui (HK); FERNANDEZ, Erwin Noble, Tsimshatsui (HK); SEVERIN, Erik, Tsimshatsui (HK); KOSHY, Pramod, Tsimshatsui (HK)
(74) Representative: Patent Boutique LLP

(57) **Abstract**

The present invention relates to a white paint composition, wherein the composition comprises fly ash, TiO₂, solvent and polymeric binder material, and wherein the fly ash has a dso particle size of less than 4.0µm.

## Description

### Field of the invention

The present invention relates to white paint compositions. The paint composition comprises TiO₂ and fly ash. The paint composition has good physical properties and good performance: such as good opacity and wet scrub resistance. The paint composition also has good moisture resistance and accelerated weathering resistance. The present invention also provides environmental benefits by increasing the use of fly ash, which is a common waste material.

### Background of the invention

Titanium dioxide is used in paint compositions to provide a high level of opacity and a high refractive index. However, titanium dioxide is a comparatively expensive material. Also, whilst titanium dioxide is useful in providing a high degree of opacity and brightness, titanium dioxide does not enhance other properties of the paint composition. Paint manufacturers continue to seek to improve the efficiency of titanium dioxide.

One way to maximise the efficiency of the TiO₂ is include "extender" or "spacer" particles. Typically, these particles increase the light scattering of titanium dioxide, and this increase the efficiency.

Other particles improve the performance and weight efficiency of the pigment particles and/or the opacity of the paint. Other particles are primarily volumetric fillers and/or can improve the physical robustness of the paint.

A paint also needs to have certain rheological characteristics for it to be easy to use and apply. A limiting factor of the amount of filler material, or other solid particles, that can be included in the paint composition is the rheology of the paint. If the paint is too thick, then it is not easy to apply and will not readily form a smooth film. In addition, typically the paint needs to be pseudoplastic to avoid dripping after application, as well as to ensure good stability and to prevent or minimize syneresis. Typically, a pseudoplastic paint has a relatively low apparent viscosity when exposed to shear, but a relatively higher apparent viscosity when not exposed to shear.

Other paint ingredients can act as simple volume fillers or improve the opacity of the paint layer. The powder particles present also provide the physical robustness of the paint, for example its resistance to abrasion. Some materials can fulfil more than one function. Very many paints have significant amounts (e.g., > 20 % or higher) of these filler materials. Common filler materials include calcium carbonate and calcium sulphate. Filler materials such as calcium carbonate need considerable effort and processing to get into suitable form for use. Typically, aqueous emulsion paints are neutral to alkaline in pH to help maintain dispersion of solid particles.

As well as needing to be effective in terms of final colour and appearance, the paint needs to be robust after application. The paint must have the right optical and surface textural properties. The paint must be easy to apply.

The inventors have now found that fly ash, particularly when controlled to the correct particle size, such as by milling, can be used in paint compositions to deliver numerous benefits. Fly ash can be used as a cost-effective filler, as an effective spacer, opacifier and extender to increase the abrasion resistance of the paint. Use of fly ash can allow for a reduction in the amount of TiO₂ required.

Controlling the particle size of the fly ash allows the fly ash particles to act as effective spacers of the TiO₂ particles present. The fly ash having this controlled particle size also improves the abrasion resistance of the paint. The fly ash can substantially reduce the volume and/or weight of titanium dioxide required in the paint composition, without substantially detracting from opacity or whiteness. Additional enhancements in performance of the paint composition includes improved wet abrasion resistance performance and humidity blister resistance performance.

Finding uses of fly ash, as well as being able to incorporate relatively high levels of fly ash into applications has huge environment rewards. Fly ash, especially coal combustion fly ash, is a waste material produced in very large quantities during the combustion of coal for electricity generation. Different designs of boiler produce different types of ashes due to differences in the fuels they can burn and any additives, such as limestone, that are added to the coal. Fly ash is typically produced from either older generation pulverised-coal combustion (PCC) plants or from newer fluidised-bed combustion (FBC) plants. Much of this fly ash is used as a pozzolan, especially the finer fly ash, but much of the remainder still goes to landfill and other waste disposal sites. The scale of the waste problem with fly ash is huge, with literally thousands of square miles of land covered in fly ash disposal sites.

There is therefore a constant need to find additional uses for waste fly ash to minimise ash disposal issues. This is both for fly ash that is being currently produced and for fly ash that is mined from old disposal sites. Replacing raw materials used in other processes with waste fly ash has obvious environmental, and often economic, benefits.

### Summary of the invention

The present invention provides a white paint composition, wherein the composition comprises:
(a) from 3wt% to 35wt% fly ash;
(b) from 1wt% to 30wt% TiO₂;
(c) from 20wt% to 50wt% solvent; and
(d) from 10wt% to 30wt% polymeric binder material.
   wherein the fly ash has a dso particle size of less than 4.0µm.

### Detailed description of the invention

### White paint

The white paint composition comprises:
(a) from 3wt% to 35wt% fly ash;
(b) from 1wt% to 30wt% TiO₂;
(c) from 20wt% to 50wt% solvent; and
(d) from 10wt% to 30wt% polymeric binder material.

Preferably, the white paint composition is an aqueous white paint composition. Preferably, the solvent is water. Preferably, the composition comprises from 20wt% to 50wt% water.

Preferably, the composition is in the form of an emulsion.

Preferably, the solvent is water and the polymeric binder material is a carboxylate polymer.

Preferably, the weight ratio of fly ash to TiO₂ is in the range of from 1:3 to 30:1, preferably from 1:1 to 30:1, or from 1.5:1 to 20:1, or from 2:1 to 10:1, or from 2:1 to 6:1, or from 2:1 to 4:1. Compositions having these weight ratios are optimized for TiO₂ performance and are extremely environmentally friendly.

Alternatively, the weight ratio of fly ash to TiO₂ can be in the range of from 0.6:1 to 1.5:1. Compositions having this weight ratio exhibit good wet scrub resistance and water resistance, and do not easily blister or blemish.

The weight ratio of fly ash to TiO₂ can be in the range of from 0.05:1 to 1:1, or even from 0.1:1 to 0.8:1.

Preferably, the composition comprises from 10wt% to 35wt%, or from 15wt% to 35wt%, or from 20wt% to 35wt%, or from 20wt% to30wt% fly ash.

Typically, the composition comprises from 1wt% to 30wt% TiO₂, or from 5wt% to 20wt% TiO₂.

Preferably, the composition comprises from 1wt% to 8wt% TiO₂. Alternatively, the composition may comprise from 15wt% to 30wt% TiO₂.

Typically, the composition has a viscosity in the range of from 400 cP to 2500 cP, or from 400 cP to 2000 cP, or from 400cP to 1750 cP, of from 400 cP to 1500 cP, or from 500 cP to 1500 cP. The viscosity of the paint composition can be adjusted as required, e.g., to accommodate storage stability and/or various application methods such as spray vs brush.

Preferably, the composition is thixotropic.

The composition may comprise other powder materials. The composition may comprise from 0wt% to 30wt%, or from 1.0wt% to 27wt%, or from 1.0wt% to 25wt%, or from 1wt% to 20wt%, or from 1wt% to 15wt% other powder materials.

Suitable powder materials include materials to adjust optical or rheological properties of the composition, and additional pigments to provide colour.

Other powder materials can include calcium carbonate and/or calcium sulphate.

Other powder materials include barium sulphate, talc, wollastonite, calcium carbonate and/or calcium sulphate, silca, quartz, mica, and any combination thereof. Other suitable powder materials include calcium silicate and/or dolomite.

The white paint can be a brilliant white, but it can also be an off-white, such as a pastel. Typically, a white paint is defined by the L^{∗}a^{∗}b^{∗} values of the paint (preferably the dried paint), wherein L^{∗} is greater than 80, and a^{∗} and b^{∗} are independently within the range of +/-10.

Typically, the composition has a whiteness L value of greater than 80, or greater than 85, or greater than 90, or greater than 95.

Typically, the composition has whiteness a and b values each independently in the range of from -10.0 to +10.0.

Typically, the composition has a hiding power to contrast ratio of greater than 98.0, or even greater than 99.0.

The composition typically comprises other ingredients. Any suitable ingredient may be formulated into the composition. Suitable additional ingredients are described in more detail below.

### Fly ash

The fly ash has a dso particle size of less than 4.0µm, preferably less than 3.0µm, and preferably in the range of from 0.5µm to 3.0µm, or from 1.0µm to 2.0µm.

Preferably, the fly ash has a d₉₀ of less than 6.0µm, or less than 5.0µm, or less than 4.0µm.

A narrow particle size distribution is preferable.

Fly ash having a d₉₀ of less than 4.0µm and a dso in the range of from 1.0µm to 2.0µm is particularly preferable.

Preferably, the fly ash has an oil adsorption of less than 40cc/100g, or less than 35 cc/100g, or in the range of from 1 to 35 cc/100g, or from 10 cc/100g to 30 cc/100g. A further benefit of using fly ash, as compared to other possible materials, is that fly ash typically has a low oil adsorption value. The oil adsorption value relates to the porosity of a powder and its ability to adsorb liquid. The addition of an adsorbent powder to a paint can obviously have a major effect on the rheology of the paint as the adsorbent powder "soaks up" liquid: whether water or other solvents. This can limit the amount of useful powder that can be added to a paint if the required rheology is to be maintained. A paint cannot be too thick if it is to be easy to apply. The use of inherently low absorbency fly ash allows higher levels of fly ash to be added to a paint. This in turn provides improved benefits for abrasion resistance and cost, without the viscosity of the paint being increased excessively.

Typically, the fly ash is acid treated. A preferred beneficiation process for fly ash uses acid-treatment of the fly ash. A preferred fly ash is acid treated and milled (can be simultaneously or sequentially). The acid treatment can remove alkaline species such as calcium oxide, other metal species such as iron salts and may also leave a roughened surface. Without wishing to be bound by theory, it is believed that particles with rough or irregular surfaces have surface pores which help to trap and better hold TiO₂ particles in place, thus counteracting their tendency to aggregate. The acid-treatment can also reduce the level of iron (and other metal) species in the fly ash. The iron, and other metal species present in the fly ash can result in fly ash having a dark colour.

Preferably, the fly ash comprises less than 1.5wt%, or less than 1.0wt%, or less than 0.5wt% Fe₂O₃.

Preferably, the fly ash comprises less than 1.5wt%, or less than 1.0wt%, or less than 0.5wt% CaO.

Preferably, the fly ash has a zeta potential in the range of from -20mV to -60mV. Typically, the zeta potential is measured at a pH of 7.0, and at a solids concentration of 0.1 wt% in a 0.01M NaCl aqueous solution.

Typically, the whitened fly ash has an iron oxide content of less than 1.5wt% or less than 1.0wt%, or even less than 0.5wt%.

Preferably, the fly ash is coal combustion fly ash, most preferably pulverised coal combustion (PCC) fly ash. The fly ash can be Type F coal fly ash.

The fly ash typically has a characteristic spherical shape, that can be analysed in the paint composition.

### TiO₂

TiO₂ has a number of polymorphs, typically the pigment particles are either anatase or rutile. Most commonly rutile. Many TiO₂ pigments are surface modified to optimise specific aspects of their performance. For example, TiO₂ pigments can be treated to make the surface more hydrophobic to ensure compatibility in paints with higher levels of organic solvents. Suitable TiO₂ pigments include the Ti-Pure range, such as Ti-Pure R906, and the Tioxide range from Venator.

TiO₂ particles may have positive or negative Zeta-potential values at the typical pHs of paints, depending on the surface treatments. For example, R-906 titanium dioxide pigment has a positive zeta potential at conditions where fly ash has a negative zeta potential.

Suitable TiO2 includes the Ti-Pure range from Chemours, TiO₂ supplied by Kronos, the INEOS Pigments range from INEOS Enterprises, the TIOXIDE, SACHTLEBEN and DELTIO range from Venator, the TiONA range from Tronox, TiO₂ supplied by Cinkara, the Pretiox range supplied by Precheza, TiO₂ supplied by Ishihara, the BILLIONS range supplied by LB Group, the DeTOX range supplied by Devine Chemicals Ltd., and the Tytanpol range supplied by Grupa Azoty Police.

Suitable TiO₂ includes rutile and anatase grades of titanium dioxide. Typically, rutile titanium dioxide is preferred. The surface of the titanium dioxide may be treated with various organic surface treatments or inorganic surface treatments.

Without wishing to be bound by theory, combinations of fly ash extender particles with TiO₂ pigment particles wherein the particles have differing zeta potential values (+ and -) are sometimes preferred as the interaction of the particles is increased.

### Solvent

The composition comprises from 20wt% to 50wt% solvent.

The solvent can act such that the polymeric binder material dissolves, either partially or completely in the solvent, or the solvent can also act as a liquid carrier material where the polymeric binder does not dissolve but instead forms a colloid or separate phase from the solvent.

Most commonly, the solvent is water.

The solvent can be an organic solvent. Organic solvents include aliphatic hydrocarbons, for example paraffin distillates such as white spirit. Other organic solvents include toluene, ethyl benzene, mixed xylenes, high flash point napthas, and any combination thereof. Such organic solvents are typically used in oil paints.

Suitable solvents also include "oxygenated solvents", which describe species such as ketones, esters, alcohols, glycol ethers, glycol ether esters and ether esters. Such oxygenated solvents can be used for multiple purposes in a paint, such as an antifreeze or coalescent agent as well as being a solvent. Examples of suitable glycol ether solvents include methyl carbitol (2-(2-methoxyethoxy)ethanol, ethyl carbitol, and any combination thereof. Suitable glycol solvents include ethylene glycol, propylene glycol, hexylene glycol, and any combination thereof. Another suitable solvent is 2,2,4-trimethyl-1,3-pentanediol monoisobutyrate. These oxygenated solvents are also known as oxygenated hydrocarbons.

A suitable organic solvent can be an oxygenated hydrocarbon that contains one or more oxygenated functional groups such as an ester, alcohol and/or ether or a combination thereof. The composition may comprise from 20wt% to 50wt% of an oxygenated hydrocarbon.

The solvent may be a mixture of water and oxygenated hydrocarbon. For this mixed solvent system, the composition may comprise from 1wt% to 20wt% oxygenated hydrocarbon.

The solvent can be non-aqueous solvent. A suitable non-aqueous solvent is an organic solvent.

Non-aqueous solvents often have negative environmental impacts when released into the environment during drying. This has driven the growth in more environmentally-friendly "low VOC" (low volatile organic content) or non-VOC paint compositions, such as water-borne paint compositions, especially water-bome emulsion paint compositions.

However, some solvents which breakdown more readily in the atmosphere, and hence pose much less risk to the environment, are regulated as "exempt" solvents which do not have to meet regulatory limits. Preferably, the solvent is an exempt solvent. Examples of exempt solvents include acetone, dimethyl carbonate, methyl acetate, parachlorobenotrifluoride, tert-butyl acetate, propylene carbonate, and any combination thereof. Such exempt solvents can be used at higher levels than non-exempt solvents. Exempt solvents can be used in paint compositions for applications where water solvent is not suitable.

Preferably, the solvent is selected from organic solvent, water, and a combination thereof.

Preferably, the solvent is water.

Preferably, the composition comprises from 20wt% to 50wt% water.

It may also be preferred for the solvent to be an organic solvent.

A suitable organic solvent is an aliphatic hydrocarbon. Typically, aliphatic hydrocarbon solvents are used in oil-based paint compositions.

The composition may comprise from 20wt% to 50wt% organic solvent. The composition may comprise from 20wt% to 50wt% aliphatic hydrocarbon.

### Polymeric binder material.

Preferably, the composition comprises 10wt% to 30wt%, or from 15wt% to 30wt% polymeric binder material.

Preferably, the polymeric binder material is selected from carboxylate polymer, alkyd polymer, or a combination thereof. The polymeric binder material can be a carboxylate polymer. The polymeric binder material can be an alkyd resin.

Suitable carboxylate polymers are polycarboxylate polymers.

The composition may comprise from 10wt% to 30wt%, or from 15wt% to 30wt% carboxylate polymer.

The composition may comprise from 10wt% to 30wt%, or from 15wt% to 30wt% alkyd resin.

Suitable polymeric binder materials are sold by Arkema and Dow.

Carboxylate polymers. A particularly preferred polymeric binder material is carboxylate polymer. Suitable carboxylate polymers include homopolymers, copolymers and/or terpolymers, suitable polymers include carboxylate polymers that comprise monomers selected from, methanoic acid, ethanoic acid, propanoic acid, butanoic acid and any combination thereof. A particularly suitable carboxylate polymer comprises propanoic acid monomers and/or monomers derived from propanoic acid.

Suitable carboxylate polymers include homopolymers, copolymers and/or terpolymers selected from polyacrylates. Suitable polyacrylates include polyacrylates comprising monomers selected from vinyl acrylates, ethylene-vinyl acetate-acrylic acid, styrene-acrylic acid, ethylene-vinyl acetate-acrylate, polyvinyl acetate-polyvinyl chloride-acrylate (PVC/PVAc), and methacrylate. Derivatives of these monomers are also suitable for use in the polyacrylate polymers.

Suitable carboxylate polymers are carboxylate polymers based on derivatives of acrylic acid, or methacrylic acid, such as polyacrylates, styrene-acrylic polymers, and co-polymers of acrylic acid and methacrylic acid.

Suitable carboxylate polymers include vinyl functional monomers, such as vinyl acetate-acrylic co-polymers.

Suitable carboxylate polymers are the Carboset^{™} range of aqueous latex emulsions from Lubrizol. For example, Carboset CR-3090^{™} is a styrene-acrylic copolymer latex emulsion having a solids content of 45%. Carboset 2966^{™} is an acrylic copolymer latex emulsion with a solids content of 41 - 43%. Other suitable materials are the Primal^{™} polymer emulsion range from Dow Chemical.

Suitable carboxylate polymers are Rovene^{tm} carboxylated acrylic copolymer latex supplied by Mallard Creek Polymers, Inc., Aquamac^{tm} styrene acrylic latex polymers supplied by Polynt Composites, Acronal^{tm} styrene-acrylic latex products from BASF, and Synthemul vinyl-acrylic latex products from Polynt.

Suitable carboxylate polymers are those sold by Wacker Chemie and Arkema. Suitable polymeric binder materials include Airflex EF-811, supplied by Wacker Chemie. Airflex. EF-811 is a vinyl acetate-ethylene (VAE) copolymer emulsion.

Preferably, the polymeric binder is a carboxylate polymer. Preferably, the carboxylate polymer is in the form of a latex emulsion, preferably in the form of an aqueous latex emulsion. This is especially preferred when the solvent is water.

The carboxylate can be modified with modifying monomers to make a vinyl or styrene modified acrylic latex.

A highly preferred polymeric binder material is a carboxylate polymer. Preferably the composition comprises 10wt% to 30wt%, or from 15wt% to 30wt% carboxylate polymer.

A preferred carboxylate polymer is polyacrylate polymer or a derivative thereof.

The carboxylate polymer is typically added to the paint composition in the form of an aqueous latex emulsion or an aqueous dispersion such as a polyurethane dispersion. Such emulsions typically have a solids content of between 30wt% and 60wt%. The polymer particles in the latex are typically between 100nm and 1000nm in size.

Polycarboxylates, especially polyacrylates, offer excellent physical and chemical properties, such as fire resistance, UV light resistance, abrasion resistance, vapor permeability, high weather resistance and gloss retention.

Some carboxylate polymers also have dispersant properties and can act as dispersants. Such carboxylate polymers include homopolymers and copolymers of polycarboxylic acids, including those that have been hydrophobically- or hydrophilically-modified, e.g., polyacrylic acid or polymethacrylic acid or maleic anhydride with various monomers such as styrene, methacrylate, diisobutylene, and other hydrophilic or hydrophobic comonomers. For example, in the case of some of ingredients, the level of carboxyl functional groups in these oligomers or polymers is very high such that they are sufficiently polar and able to be dispersed in water without the addition of a neutralizing amine.

Preferably, the composition comprises from 10wt% to 30wt%, or from 15wt% to 25wt% carboxylate polymer.

Alkyd polymers. A suitable polymeric binder material is an alkyd polymer.

Typically, alkyds are vegetable oil or fatty acid-modified low molecular weight polyesters derived by the condensation reaction of polyhydric alcohols, monobasic and polybasic acids, vegetable oils, and fatty acids. Alkyd polymers, also typically known as alkyd resins, are then typically synthesized by the esterification of suitable carboxylic and hydroxyl group-containing molecules. Suitable alkyd resins include short, medium and long oil alkyds. Short oil alkyds typically comprise less than 40wt% fatty acid. Medium oil alkyds typically comprise from 40wt% to 60wt% fatty acid. Long oil alkyds typically comprise greater than 60wt% fatty acid.

Alkyd resins are normally used in solvent-borne paints using hydrocarbon-based solvents. Suitable hydrocarbon-based solvents can be non-oxygenated or oxygenated solvents. Alkyd resins can be modified to make them more compatible with water, to enable their use in water-bome paints.

It may also be preferred for the polymeric binder material to be an alkyd resin. This is especially preferred when the solvent is an organic solvent, such as an aliphatic hydrocarbon.

Modified alkyd polymers are also suitable. A suitable alkyd polymer is selected from silicon-modified alkyd polymers. A suitable alkyd polymer can also be selected from acrylic modified alkyd polymers.

An example of a suitable alkyd resin is Duramac 207-1388 from Polynt Group.

Epoxy polymers. A suitable polymeric binder material is an epoxy polymer. Epoxy polymers are typically also known as epoxy resins.

Epoxy resins can be liquid-borne or non-aqueous solvent-borne.

Suitable epoxy resins can be obtained by reacting epichlorohydrin with bisphenol. Suitable bisphenols include bisphenol A, bisphenol B and/or bisphenol F, preferably bisphenol A. A suitable epoxy resin is Ancarez AR 555 from Evonik, which is a 55wt% solids water-bome epoxy resin.

Epoxy resins can also be modified with a number of materials which may include for example fatty acids to make epoxy esters. An example of an epoxy ester is Ranbar 4892 sd-50 from Gabriel Performance Products. Some epoxy esters have pendent hydroxyl groups, which when exposed to higher temperatures and can be reacted with crosslinkers such as aminoplasts such as melamine and urea formaldehyde or isocyanate functional crosslinkers. Other epoxy-esters such as 4692 sd-50 from Gabriel Peformance Products can be used in either ambient cure or heat cured systems when a crosslinker is present.

The epoxy resin is typically blended with a curing agent prior to incorporation into the paint composition.

Any suitable chemistry can be used to cure the epoxy resin. Suitable curing agents include polyamines and polyamides.

A commercially available polyamide epoxy curing agent is Ancamide 220 from Evonik.

Suitable epoxy resins can be obtained by reacting epichlorohydrin with bisphenol. Suitable bisphenols include bisphenol A, bisphenol B and/or bisphenol F. A preferred bisphenol is bisphenol A.

A suitable epoxy resin is Ancarez AR 555 from Evonik, which is a 55wt% solids water-bome epoxy resin.

One example of a water-borne epoxy resin is Ancarez AR 555 from Evonik, which is a 55% solids water-bome epoxy resin.

Other polymeric binder material. Any suitable polymeric binder material can be used. Suitable polymer binder material is selected from polyesters, modified polyesters such as siliconized polyesters, and especially oil-modified polyesters. Typically, such polyesters are used in combination with organic solvents, typically aliphatic hydrocarbons, and oxygenated organic solvents.

Other suitable polymeric binder materials are selected from: vinyl acetate-vinyl versatate; vinyl acetate-vinyl maleate; ethylene-vinyl acetate; styrene-butadiene; polyvinyl acetate; polysiloxanes; silane-modified polymers; halopolymers, such as fluoropolymers (e.g., polyvinylidene fluoride, FEVE (fluorinated ethylene vinyl ether), polyvinyl chloride; polychloroprene); styrene-butadiene; polyesters; polyurethanes, especially polyurethanes suitable for forming water-bome dispersions; polyurethane dispersion (PUD); plastisol (PVC and plasticizer); inorganic polymer coating systems; phenolic resins including epoxy-phenolic resins; polybutadiene, polyolefin, hybrid polymers, polyether polyols, and any combination thereof.

Suitable polymeric binder materials are sold by Wacker Chemie and Arkema. Suitable polymeric binder materials include Wacker EF-811 by Wacker Chemie, Airflex^{®} EF811 by Air Products Polymers L. P..

The polymeric binder material may be a two-component polyurethane material. Two-component polyurethane materials are widely used, e.g., as coatings, in a number of applications, such as automotive refinish topcoats, aerospace topcoats for both commercial and military application, topcoats for off-shore oil rigs, heavy duty maintenance coatings, and bridge coatings. Polyurethanes can be tailored to provide a variety of performance requirements including superb exterior weather resistance, light stability, chemical resistance, flexibility, moisture resistance and corrosion resistance when applied over an epoxy primer. Two-component urethane materials use a wide variety of polymers in a combination of component A and component B. Suitable component A materials include hydroxy functional polymers, such as those commonly used include polyesters, acrylics, fluorpolymers as well as hybrid polymers. Suitable part B components include a reactive prepolymer containing reactive isocyanate functionality. The reaction between component A (polyol) and component B (isocyanate) forms the two-component polyurethane material. For exterior topcoats, an aliphatic isocyanate prepolymer is typically used as it provides good weather resistance properties once crosslinked with a light stable binder in component A. Aromatic isocyanate prepolymers can also be used but can have inferior light stability to their aliphatic isocyanate counterparts. Accordingly, when aromatic isocyanates are used, they are typically employed in primer and/or for interior applications not requiring light stability. Two-component polyurethane materials can be either solvent-born or water-borne. Examples of component A polyol include Joncryl 903 acrylic polyol available from BASF, Setalux 17-1084 hydroxy functional acrylic polyol from Allnex, Bayhydrol A 2470 Aqueous hydroxyfunctional polyacrylic waterborne dispersion for 2K polyurethanes from Covestro and Lumiflon LF200F fluoroethylene vinyl ether polyol from AGC Chemicals Americas, Inc. Examples of suitable polyisocyantes for use in component B include Desmodur A100A aliphatic polyisocyanate from Covestro, Desmodur N3200 aliphatic polyisocyanate from Covestro, Bayhydur 302 from Covestro is a solvent free water dispersible aliphatic polyisocyanate and Drodur L75 which is an aromatic polyisocyanate from D.R. Coats. Ink & Resins Pvt. Ltd. Multiple types of catalysts can be used to accelerate the reaction between the hydroxy group on the polyol and that of the isocyanate. A commonly used catalyst is dibutyl tin dilaurate.

Single component reactive urethanes can be formulated utilizing a blocked isocyanate that unblocks at a higher temperature for baked coating systems. Such single component urethanes also contain a polyol binder as well as a suitable blocked isocyanate. Depending on the selection of the polyol as well as the blocked isocyanate, such coatings are used as primers and topcoats in the automotive, coil coating and for product finishing applications. The blocked isocyanate can be aliphatic or aromatic, and blocking agents include a variety of blocking agents that react with the isocyanate group to form a blocked isocyanate. Common blocking agents include caprolactone, methyl ethyl ketoxime, 1,3 pyrazole, diisopropanol amine and 3,3 dimethylpyrazole. The unblocking temperature of the blocked isocyanate is dependent on the blocking agent used as well as the presence of catalyst such as dibutyl tin diluarate. For example, caprolactone blocked IPDI-trimethylol polyether triol is 163 C with dibutyl tin diluarate catalyst, whereas 3,5-dimthylpyrazole blocked IPDI-trimethylol polyether triol is 112 C in the presence of dibutyl tin dilaurate catalyst.

Suitable polymeric binder materials are selected from acrylic, vinyl, polyester, siliconized polyester, alkyd, polyurethane, epoxy, phenolic, epoxy-phenolic, fluoropolymer, halopolymers (such as polyvinylidene fluoride, FEVE (fluorinated ethylene vinyl ether), polyvinyl chloride, polychloroprine), polybutadiene, polyolefin, hybrid polymers, polyether polyols, polysiloxane and any combination thereof.

Other polymers may also be present such as those incorporating the monomer polyvinyl acetate.

### Additional ingredients

The composition may comprise particulate material. Typically, the particulate material improves the colour, opacity and/or mechanical robustness of the composition. Combinations of materials can be used to provide the specific properties required.

Particulate material includes pigments, auxiliary pigments (also known as extenders), matting agents, fillers, ceramic beads, gloss beads, hollow glass beads, plastic beads, and any combination thereof.

Many particulate materials have multiple functionalities. For example, a synthetic aluminosilicate "extender" particulate material can improve the efficacy of a pigment (and hence reduce the amount needed), alter (e.g., increase) the opacity of the paint composition, and/or provide increased abrasion resistance.

Filler particulate materials and/or auxiliary pigments can be added at relatively high levels to the paint composition. The total combined amount of filler particulate material and auxiliary pigment present in the composition may be from 1wt%, or from 10wt%, and up to 40wt%.

Suitable particulate materials include calcium carbonate, calcium sulphate, calcium silicate, gypsum, barium sulphate, dolomite, mica, kaolin, including calcined kaolin, talc, nepheline syenate, quartz, feldspar, diatomaceous earths, aluminosilicates, aluminium oxide, wollastonite, blanc fixe (synthetic barium sulfate), barium sulfate, lithophone (zinc sulfide-barium sulfate). corrosion inhibitive pigments such as those available from icl such as HALOX SZP-391 from ICI, zinc phosphate which can inhibit corrosion due to the ability to pacify corrosion at the anode or cathode of the electrochemical corrosion process. and any combination thereof.

Auxiliary pigments. Auxiliary pigments, also known as extenders, can improve the efficacy of a pigment as well as provide specialized performance attributes. For example, talc provides improved sanding properties, lithopone provides improved hardness in primer formulation, and mica reduces moisture permeation due to the platelike structure. Auxiliary pigments are typically also fillers, as their cost is typically much less than the pigment. The composition may comprise from 1wt%, or from 10wt%, and to 40wt% auxiliary pigment.

Fillers. Suitable fillers are typically filler particulate materials, typically having low-cost. Filler particulate materials are typically added at high levels to bulk out the volume of the paint composition, as well as often providing mechanical robustness.

The composition may comprise from 1wt%, or from 10wt%, and to 40wt% filler particulate material.

### Pigment

Suitable pigments can be functional pigments. These functional pigments provide specific performance attributes such as mechanical properties, improved corrosion resistance, sandability, or abrasion resistance. For example, blanc fixe (synthetic barium sulfate), barium sulfate, lithophone (zinc sulfide-barium sulfate). corrosion inhibitive pigments such as those available from ICL such as halox SZP-391, zinc phosphate, which can inhibit corrosion due to the ability to pacify corrosion at the anode or cathode of the electrochemical corrosion process.

Suitable pigments can be pigments for colour. Suitable pigments include: copper phthalocynanine, cobalt blue, prussian blue (which all typically provide a blue colour); cobalt green, chromium oxide, phthalocyanine green (which all typically provide a green colour); quinacridone red, red iron oxide (which all typically provide a red colour); yellow iron oxide, cadmium yellow (which all typically provide a yellow colour); carbon black, black iron oxide (which all typically provide a black colour); ultramarine violet, quinacridone violet (which all typically provide a violet colour); and any combination thereof.

Suitable pigments include inorganic colour pigments such as zinc white, pigment grade zinc oxide; zinc sulfide, lithopone black pigments such as iron oxide black (C.I. Pigment Black 11), iron manganese black, spinel black (C.I. Pigment Black 27); carbon black (C.I. Pigment Black 7); and chromatic pigments, such as chromium oxide, chromium oxide hydrate green; chrome green (C.I. Pigment Green 48); cobalt green (C.I. Pigment Green 50); ultramarine green; cobalt blue (C.I. Pigment Blue 28 and 36; C.I. Pigment Blue 72); ultramarine blue; manganese blue; ultramarine violet; cobalt violet; manganese violet; red iron oxide (C.I. Pigment Red 101); cadmium sulfoselenide (C.I. Pigment Red 108); cerium sulfide (C.I. Pigment Red 265); molybdate red (C. I. Pigment Red 104); ultramarine red; brown iron oxide (C.I. Pigment Brown 6 and 7), mixed brown, spinel phases and corundum phases (C.I. Pigment Brown 29, 31, 33, 34, 35, 37, 39, and 40) , chromium titanium yellow (C.I. Pigment Brown 24), chrome orange; cerium sulfide (C.I. Pigment Orange 75); yellow iron oxide (C.I. Pigment Yellow 42); nickel titanium yellow (C.I. Pigment Yellow 53; C.I. Pigment Yellow 157, 158, 159, 160, 161, 162, 163, 164, and 189); spinel phases (C.I. Pigment Yellow 119); cadmium sulfide and cadmium zinc sulfide (C.I. Pigment Yellow 37 and 35); chrome yellow (C.I. Pigment Yellow 34); bismuth vanadate (C.I. Pigment Yellow 184), and any combination thereof.

Suitable pigments include organic colour pigments such as monoazo pigments, such as C.I. Pigment Brown 25; C.I. Pigment Orange 5, 13, 36, 38, 64, 67, and 74; C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247, and 251; C.I. Pigment Yellow 1, 3, 62, 65, 73, 74, 97, 120, 151, 154, 168, 181, 183, and 191; C.I. Pigment Violet 32; diazo pigments, such as C.I. Pigment Orange 16, 34, 44, and 72; C.I. Pigment Yellow 12, 13, 14, 16, 17, 81, 83, 106, 113, 126, 127, 155, 170, 174, 176, 180, and 188; diazo condensation pigments, such as C.I. Pigment Yellow 93, 95, and 128; C.I. Pigment Red 144, 166, 214, 220, 221, 242, and 262; C.I. Pigment Brown 23 and 41; anthanthrone pigments, such as C.I. Pigment Red 168; anthraquinone pigments, such as C.I. Pigment Yellow 147, 177, and 199; C.I. Pigment Violet 31; anthrapyrimidine pigments, such as C.I. Pigment Yellow 108; quinacridone pigments, such as Pigment Orange 48 and 49; C.I. Pigment Red 122, 202, 206 and 209; C.I. Pigment Violet 19; quinophthalone pigments, such as C.I. Pigment Yellow 138; diketopyrrolopyrrole pigments, such as C.I. Pigment Orange 71, 73, and 81; C.I. Pigment Red 254, 255, 264, 270, and 272; dioxazine pigments, such as C.I. Pigment Violet 23 and 37; C.I. Pigment Blue 80; flavanthrone pigments, such as C.I. Pigment Yellow 24; indanthrone pigments, such as C.I. Pigment Blue 60 and 64; isoindoline pigments, such as C.I. Pigments Orange 61 and 69; C.I. Pigment Red 260; C.I. Pigment Yellow 139 and 185; isoindolinone pigments, such as C.I. Pigment Yellow 109, 110, and 173; isoviolanthrone pigments, such as C.I. Pigment Violet 31; metal complex pigments, such as C.I. Pigment Red 257; C.I. Pigment Yellow 117, 129, 150, 153, and 177; C.I. Pigment Green 8; perinone pigments, such as C.I. Pigment Orange 43; C.I. Pigment Red 194; perylene pigments, such as C.I. Pigment Black 31 and 32; C.I. Pigment Red 123, 149, 178, 179, 190, and 224; C.I. Pigment Violet 29; phthalocyanine pigments, such as C.I. Pigment Blue 15, 15:1, 15:2, 15:3, 15:4, 15:6, and 16; C.I. Pigment Green 7 and 36; pyranthrone pigments, such as C.I. Pigment Orange 51; C.I. Pigment Red 216; pyrazoloquinazolone pigments, such as C.I. Pigment Orange 67; C.I. Pigment Red 251; thioindigo pigments, such as C.I. Pigment Red 88 and 181; C.I. Pigment Violet 38; triarylcarbonium pigments, such as C.I. Pigment Blue 1, 61, and 62; C.I. Pigment Green 1; C.I. Pigment Red 81, 81:1, and 169; C.I. Pigment Violet 1, 2, 3, and 27; C.I. Pigment Black 1 (aniline black); C.I. Pigment Yellow 101 (aldazine yellow); C.I. Pigment Brown 22; and any combination thereof.

### Coalescent agent

Coalescent agents are materials that promote the coalescence of polymer particles during the drying and film-forming process. Coalescent agents are typically liquid. Typically, they soften and plasticize the external surfaces of polymer particles, enabling coalescence of the polymer particles leading to film formation. Suitable coalescent agents include ester alcohols, esters, glycol ethers, and any combination thereof.

### Rheology modifier

A rheology modifier is an ingredient that modifies, typically thickens, the rheological profile of the paint composition.

A suitable rheology modifier is a thickener. Preferred thickeners are associative thickeners.

Suitable thickeners include: hydrophobically-modified alkali soluble emulsions, typically referred to as HASE; alkali soluble emulsions, typically referred to as ASE; hydrophobically modified ethylene oxide-urethane emulsions, typically referred to as HEUR; hydrophobically modified ethoxylated urethane alkali swellable emulsion, typically referred to as HEURASE; cellulosic thickeners, such as hydroxy methyl cellulose, hydroxyethyl cellulose, 2-hydroxyethyl methyl cellulose, 2-hydroxybutyl methyl cellulose, hydrophobically-modified hydroxy ethyl cellulose, sodium carboxymethyl cellulose, sodium carboxymethyl 2-hydroxyethyl cellulose, 2-hydroxypropyl methyl cellulose, 2-hydroxyethyl ethyl cellulose, 2-hydoxypropyl cellulose, hydrophobically modified ethyl cellulose typically referred to as HMEC, and any combination thereof; polyvinyl alcohol (PVA); fumed silica; bentonite clay; and any combination thereof.

Suitable rheology modifiers are the Dow Acrysol product line, Arkema Coatex Coapur, Rheotech, Viscoatex, Thixol and Polyphobe product lines, Ashland Aquaflow NSAT product line (especially Aquaflow NHS-310), and any combination thereof.

Common rheology modifiers in solvent-born paint compositions include organo-clay, hydrogenated castor wax, polyamide, fumed silica, and any combination thereof.

### Neutraliser

Most waterborne carboxylate polymers require an amine-based neutralizer. The neutralizer increases the polarity (intensity of the positive - negative charge) when added to a waterborne polymer. This in turn improves the water-dispersibility and thus the ability to be incorporated in water-based system. Typical examples of amine neutralizers used with waterborne polymers in paint include ammonium hydroxide, triethyl amino methyl propanol and dimethyl ethanol amine.

### Wetting agents & dispersing agents

### Dispersants.

Dispersants are used to facilitate the process of incorporating a non-soluble solid (like a pigment) and help to suspend the solid particle in a liquid and stabilize it against agglomeration and settling.

Suitable dispersants include non-ionic, anionic and cationic dispersants.

Cationic dispersants include 2-amino 2-methyl 1-propanol (AMP) and dimethyl amino ethanol (DMAE).

Other suitable dispersants include potassium tripolyphosphate (KTPP), trisodium polyphosphate, citric acid and other carboxylic acids, and any combination thereof.

Surfactants can also function as dispersing agents.

Dispersants are typically added at very low levels, such as less than 1.0wt%, or less than 0.5wt%, or less than 0.2wt % of the paint composition.

A suitable dispersant is Tamol 165A from Dow. Other suitable dispersants include Tamol 731A, Tamol 1124, Coatex Coadis 123K, and combinations thereof.

Suitable dispersants are sold by Arkema.

### Wetting agents.

Wetting agents are surface active materials used to reduce the surface tension of water and thus allow for easier incorporation in water. Wetting agents, much like surfactants, can be anionic, cationic or nonionic.

An example of a wetting agent is polyvinyl butyral, depending on molecular weight and level of acetalization polyvinyl butryal can be used as a wetting agent.

### Surfactants.

Surfactants are used as wetting agents and dispersants. Surfactants can be anionic, nonionic or catioinic. An example of a nonionic surfactant used as a wetting agent is Hydropalat WE 3320 from BASF.

### Drier

Driers are catalysts that are typically added to oil-based paint compositions to accelerate the cross-linking of the oil. Suitable driers include iron octoate, calcium octoate, cobalt octoate, zinc octoate, copper octoate, barium octoate, lead octoate, red lead, litharge, and any combination thereof.

### Defoamer

Defoamers are typically added to paint compositions to control (e.g., reduce) the formation of foam. Air can be incorporated into the paint composition during manufacture or application, which can lead to various negative results.

In water-borne paints compositions, the defoamer is primarily used to avoid air entrapment during manufacture and packing due to the presence of surfactants and other surface-active materials that are typically present in the water-borne paint composition.

In solvent-bome paint compositions, the defoamers are primarily used to avoid air entrapment during application.

Suitable defoamers are emulsions based on silicones, such as polysiloxanes such as poly dimethyl siloxane (PDMS). Other suitable defoamers are other hydrophobically-modified polymers, mineral oils, fatty acids, and any combination thereof.

A suitable defoamer is Foamstar ST-2420 from BASF, which is a branched polymer-based defoamer. Another suitable defoamer is Foamstar SI 2250 from BASF, which is a silicone-based defoamer.

### Antifreeze agent

An antifreeze agent may need to be added to the paint emulsion to avoid instability in cold weather, for example due to freeze-thaw. Suitable anti-freeze agents include glycols, such as monopropylene glycol. Another suitable anti-freeze agent is non-ionic surfactant, which can also improve product stability in cold conditions. Antifreeze agents, like non-ionic surfactant, will often provide multiple functionalities.

### Freeze/thaw preventatives

The composition may comprise freeze/thaw preventatives. Suitable freeze/thaw preventatives include propylene glycol, DpnB, rotoline FT 100E, and any combination thereof.

### Biocides and mildewcides

If the paint composition needs to be resistant to mold, especially mildew, then a biocide, especially a mildewcide can be incorporated into the paint composition. Suitable mildewcides include zinc oxide, isothiazolones, triazoles, and any combination thereof. Suitable isothiazolones includes 2-octyl-3-isothiazolone, 4,5-dichloro-2-octyl-3-isothiazolone, 5-chloro-2-(2-4(chlorophenyl)ethyl-3-isothiazolone, 5-chloro-2-(2-phenylethyl)-3-isothiazolone, and any combination thereof.

Biocides can also be incorporated into the paint composition to improve the in-can biostability and/or to act as an anti-fouling agent once the paint composition is applied to the surface to be painted. Suitable biocides include the isothiazolones, zinc pyrithione, chlorothalonil, silver nanoparticles, and any combination thereof.

There can be multiple strategies for controlling microbial contamination in the paint composition, including pH control. Levels of added biocides, such as anti-fungicides, as well as mildewcides in the paint composition are typically very low, such as < 0.1wt%.

### Method of making the paint composition

The paint composition is typically made by a two-step process. Initially, solvent, and optionally other liquid ingredients, are combined with particulate materials such as pigment, and optionally some additives such as dispersants, defoamers and/or wetting agents to form a blend. This blend is then milled to properly disperse the particulate material such as pigments, and/or reduce the particle size of the particulate materials to the required size. Precise control of particle size is very important for correct optical properties of the paint composition. This stage is called the "grind" stage. The fly ash will typically be introduced at the grind stage to ensure dispersion.

After the grind has been prepared, it is then typically blended with the polymeric binder material, and optionally other additives. This is typically called the "let down" stage. Typically, the polymer binder material is added during the let down stage. Coalescent agents and biocides are also typically added to the let down stage.

Typically, solvent, rheology modifiers, neutralisers, wetting & dispersing agents, biocides, defoamers, antifreeze agents, TiO₂ and other pigments, fly ash, extenders are all added for the grind stage.

Typically, polymeric binder material, defoamer, neutraliser, solvent, rheology modifiers, and mildewcide are all added for the let down stage.

### Application of the paint composition

The paint composition can be used as a white paint. It is also possible that paint composition is used as a white base, to which pigments and/or colourants are added to the paint composition, for example at the point of sale, e.g., in an in-store paint dispenser. These white base paints are typically known as high white, medium white and low white.

A typical application of the paint composition is for a water-bome architectural paint application. However, a wide variety of paint applications can also be used, which may include water-bome traffic marking, powder coating, and solvent-born industrial and maintenance paints.

Other applications are: architectural; aerospace; commercial; building products; transportation; product finishing; metal decorating; traffic marking; packaging and industrial; interior and exterior water-bome topcoats and undercoats; primers for plastics; dry wall; masonry; concrete; wood; metal; and blacktop.

Examples of application methods used in the paint industry are: brush; roller; airless or air spray; plasma; direct or reverse roll coat; sheet coat; electrodeposition; electrostatic spray; electrostatic disk; spin coat; and dip coat.

### Method of measuring particle size

The particle size distribution is typically measured by laser diffraction. A suitable standard for size analysis by laser diffraction is given in ASTM B822-20 using 0.5g of sample powder dispersed in 1 litre of deionized water. Suitable size analysers are the Mastersizer 2000 and 3000 instruments by Malvern Instruments. It is preferred to disperse the samples by compressed air (typically with a Scirocco 2000 unit) where the material is tested as a powder stream, rather than the wet method where the test material is dispersed in a fluid first. However, it is possible to disperse and test these ceramic mixtures in non-aqueous liquids. The measurement is typically done as per the manufacturer's instruction manual and test procedures.

### Method of measuring oil adsorption

The oil absorption can be measured according to ASTM D-281-12. The test sample size is 20g. Linseed oil is added dropwise to 20g of the material to be tested and mixed with a spatula until a smooth paste is formed that can be spread uniformly over a flat surface. Values are reported as cc of oil needed to first form a paste per 100g of powder.

### Method of measuring iron oxide content

The level of iron oxide is typically measured by X-ray fluorescence. The typical particle size of the fly ash is sufficiently small that the technique is suitable for accurate measurement. The technique works by the excitation of the sample using high energy gamma or X-rays. This causes an ionisation of the atoms present which then emit characteristic frequency EM radiation which is dependent on the type of atom. Analysis of the intensity of different frequencies allows an elemental analysis to be made. Suitable equipment would be the Varta range of XRF analyzers supplied by Olympus. The equipment detects elemental iron and the result is most usually converted to the corresponding level of Fe₂O₃.

### Method of measuring calcium oxide content

Calcium oxide levels can be measured by X-Ray Fluorescence as described in ASTM D4326-21 "Standard Test Method for Major and Minor Elements in Coal Ash by X-Ray Fluoresence". Suitable XRF equipment includes the Epsilon 4 XRF analyser from Malvern Panalytical using sample disks prepared using an Aegon 2 automatic fusion equipment for sample disk preparation from Claisse. The ash sample is automatically dissolved in molten lithium borate flux and formed into a disk. This is then placed in the Epsilon 4 for analysis. Equipment should be operated as per manufacturer's instructions. When measuring for CaO, the Epsilon 4 should be set to a voltage of 12 kV, a current of 25µa, not use helium as the medium, use a 50µ Al filter, and have a measurement time of 450 s.

### Method of measuring zeta potential

Suitable equipment for measuring the zeta potential of a material is the Zetasizer range from Malvern Panalytical, such as the Zetasizer Lab from the Zetasizer Advance range. Equipment should be operated as per the manufacturer's instructions. It is important to have sample concentrations that are not too high or low as this can cause attenuation of the beam. Concentrations of 0.1% (1g sample in 1 litre solution) are suitable for most materials of interest here. A solution of NaCl can also be used and concentrations of 0.01M at a pH of 7 are suitable. Measurements should be made at ambient temperature conditions.

### Method of measuring hiding power to contrast ratio

Opacity can be measured directly by the contrast ratio of a film. The contrast ratio is defined as the ratio of the reflectance of a film on a black substrate to that of an identical film on a white substrate. The reflectance or "Y" is the CIE Y value when a sample is measured on the CIE XYZ scale. Typically, the contrast ratio is reported as a %. Materials having high contrast ratios of > 99% appear visually as being fully opaque. ASTM D2805-11 "Standard Test Method for Hiding Power of Paints by Reflectometry" describes the procedures to be used. Suitable equipment includes the UltraScan PRO range from Hunterlab of Reston, VA, operating in compliance with ASTM E308-18.

The paint sample is applied to a glass plate and dried to form a film of 50 micron (2 mil) thickness, is applied onto a glass plate. The reflectance is measured using the black background glass and then using the white background glass. The contrast ratio is the ratio of the two reflectance values.

### Method of measuring viscosity

Paint viscosity measurements are usually done with multiple different test rheometers given the complex rheology of paints.

ASTM D7394-18 is commonly used and describes the use of three rheometers to cover the different shear rates of interest given the different possible application methods.

The low shear viscosity is measured using a Brookfield viscometer using the #3 spindle at 100 rpm.

High shear (12000 s-1) viscosity is measured using a cone and plate rheometer according to ASTM D4287-00 (2019).

Mid-shear viscosity is measured using a Stormer viscometer operated as per ASTM D562-10 (2018).

Sag resistance is measured according to D4400-18.

### Method of measuring the CIELAB colour space values L*, a* and b*

The colour of a material is commonly described by the use of L^{∗}, a^{∗}, b^{∗} coordinates in CIE colour space. The "L^{∗}" value refers to the whiteness where a L value of 0 would mean that a material is perfectly black whereas a L value of 100 would mean that a material appears as perfectly white. The a^{∗} value describes colours ranging from green (negative values of a^{∗}) to red (positive values of a^{∗}. The b^{∗} scale characterises colours from blue (negative b^{∗} values) to yellow (positive b^{∗} values). The L^{∗} a^{∗} b^{∗} (sometimes also referred to as the Lab or LAB scale as the "^{∗}" is sometimes dropped) characterises colours within the human perception of light. The calculation of L^{∗}a^{∗}b^{∗} values for paint samples is done according to ASTM standard D2244-21. Suitable equipment for measuring L^{∗} a^{∗} b^{∗} values of paints include the UltraScan PRO range from Hunterlab of Reston, VA, operating in compliance with ASTM E308-18.

### Process of preparing the fly ash

The fly ash is typically whitened prior to incorporation into the paint composition. A suitable process for preparing the fly ash, also herein referred to as whitened fly ash, is described below.

The process comprises the steps of:
(a) optionally, subjecting fly ash to a size classification step to obtain size classified fly ash having a particle size such that at least 90wt% has a particle size of from 44µm to 250µm;
(b) optionally, contacting the size classified fly ash from step (a) with water so as to form a slurry, wherein the slurry has a solid content of less than 40wt%;
(c) subjecting the size classified fly ash obtained in step (a) or the slurry obtained in step (b) to an exhaustive magnetic separation step to form magnetically treated fly ash, wherein the exhaustive magnetic separation step comprises a first magnetic extraction step and a second magnetic extraction step, preferably wherein the second magnetic extraction step is carried out at a higher magnetic field strength than the first magnetic extraction step; and
(d) subjecting the magnetically treated fly ash obtained in step (c) to a milling step to form whitened fly ash.

### Step (a), size classification

In step (a), the fly ash is preferably subjected to a size classification step to obtain size classified fly ash having a particle size such that at least 90wt%, or at least 95wt%, has a particle size of from 44µm to 250µm, or from 50µm to 250µm, or from 75µm to 250µm. It may be preferred that the fly ash is subjected to a size classification step to obtain size classified fly ash having a particle size such that 100wt% has a particle size of from 44µm to 250µm, or from 50µm to 250µm, or from 75µm to 250µm. The classification can be carried out in an air classifier.

This coarser fly ash, whilst too coarse to use as a pozzolan and which often is dark due to a higher concentration of larger unburnt carbon particles, has surprisingly been found to be particularly suitable for purification by magnetic extraction, and especially wet magnetic extraction. Coarser fly ash can be purified to a higher degree by magnetic extraction than finer fly ash. Without wishing to be bound by theory, it is believed that the larger a magnetically-susceptible particle is, the greater the force it will experience in a magnetic field due to the greater amount of magnetically-susceptible material present. The amount of material present in a particle of a given diameter is a function of the cube of the diameter. In contrast, the viscous drag experienced by a particle moving through a liquid is a function of its diameter. Hence, larger magnetically susceptible particles experience a greater ratio of magnetic force to viscous drag force which will enable an easier removal of the magnetically susceptible particles from a slurry.

### Optional step (b), forming a slurry

Optional step (b) contacts the size classified fly ash from step (a) with water so as to form a slurry. The slurry has a solid content of less than 40wt%, or less than 35wt%, or even less than 30wt%.

Preferably step (b) is an essential step and during the step (c) the slurry obtained in step (b) is subjected to an exhaustive magnetic separation step to form magnetically treated fly ash.

### Step (c), magnetic extraction

Step (c) subjects the size classified fly ash obtained in step (a) or the slurry obtained in step (b) to an exhaustive magnetic separation step to form magnetically treated fly ash.

The exhaustive magnetic separation step comprises a first magnetic extraction step and a second magnetic extraction step. The second magnetic extraction step is carried out at a higher magnetic field strength than the first magnetic extraction step. Additional magnetic extraction steps can also be used, typically each subsequent magnetic extraction step is carried out at a higher magnetic field strength than the preceding magnetic extraction step. It may be preferred for a third magnetic extraction step to be carried out, and wherein the third magnetic extraction step is carried out at a higher magnetic field strength than the second magnetic extraction step.

Typically, the magnetically treated fly ash has an iron oxide content of less than 1.0%, or even less than 0.5%.

Step (c) uses an exhaustive process of magnetic extraction and can remove particles even with a very low level of magnetically susceptible iron-containing species so as to leave a residue of highly purified material having a very low iron content. This is different to most magnetic separation steps which either are: (i) designed to only remove particles with high iron content for further processing such as metal extraction; and/or (ii) designed for the beneficiation of fly ash for use as a pozzolan.

The process comprises an exhaustive magnetic extraction step. By exhaustive it is mean that the slurry is subjected to multiple steps of magnetic extraction wherein the intensity of the magnetic field strength is constant, or increased, during each subsequent step. Typically, the slurry is only progressed to the next magnetic-strength extraction step when no more magnetically susceptible material can be extracted at the current magnetic field strength. If the size classified fly ash or the slurry is subjected to only a single high intensity magnetic extraction step, much of the non-magnetic material is also removed. Without wishing to be bound by theory, it is believed that the non-magnetic material becomes trapped by the bulk of all of the magnetically susceptible material that is removed all in one go.

The inventors have found that if the magnetically susceptible material is removed by a number of magnetic extraction steps, as required by the process of the present invention, then only a limited amount of material is removed in any one step. This in turn improves the overall efficiency of the process and less non-magnetically susceptible material is removed from the size classified fly ash or the slurry during step (c).

Step (c) can be carried out by passing a magnetic bar of a given magnetic field strength through the slurry, typically in a slow and controlled manner so as to avoid removing particles due to drag. The magnetic bar can then be removed from the slurry and the magnetically susceptible material which adheres to the magnetic bar can be removed. Typically, a first magnetic bar of relatively low magnetic field strength is used until no more magnetically susceptible material is removed by each pass of the magnetic bar through the slurry. Typically, a second magnetic bar of relatively higher magnetic field strength is then used and the magnetic extraction step repeated. Further magnetic extraction steps with each step using a magnetic bar having relatively higher magnetic field strength can be used. This process of repeatedly, and preferably gently, extracting magnetically susceptible material (thus "exhausting" the extraction of magnetically susceptible material at a given magnetic field strength) before moving onto the next step is different to other commercially used processes.

It is preferred if the slurry used in the magnetic extraction step has a solid content of less than 40wt%, or less than 35wt%, or even less than 30wt%. This is because the separation of particles is harder to do in a high solid content slurry because of particle:particle interactions and collisions.

Typically, magnets are passed through the aqueous slurry or the slurry is passed through a magnetic separator. This procedure is typically repeated multiple times, for example until no more magnetically susceptible material is extracted by the magnet. This typically requires a minimum period of treatment time for the slurry to be subjected to the magnetic field. If the magnetic treatment time is too short, the magnetically susceptible material may not have sufficient chance to be removed. A typical minimum treatment time is at least 1 minute, or even at least 5 minutes, or even at least 10 minutes, or even longer. The period of treatment time may be achieved over multiple steps, such as passes through a magnetic separator at a given magnetic field intensity.

A suitable magnetic treatment may be a 1000 Gauss magnetic bar drawn repeatedly through the slurry, followed by a 3000 Gauss magnetic bar drawn repeatedly through the slurry, followed by an 8000 Gauss or a 10000 Gauss magnetic bar.

Other types of magnetic separator are also suitable, especially for large-scale industrial processes. Suitable types of separator include so-called Wet High Intensity Magnetic Separators wherein magnetic particles are removed from a slurry by being magnetically attracted to the surface of a rotating drum by application of a suitable magnetic field. Other suitable designs include cascading magnetic separators where the slurry flows by gravity over a magnetic surface. There are multiple designs but all rely on passing material, preferably in slurry form, close to a magnetic surface such that magnetic particles adhere to the surface. The magnetic particles can be washed off or otherwise removed from the surface. The magnetic field can be created by (suitably positioned) permanent magnets or can generated by electromagnets. A preferred approach involves use of one or more magnetic separators having adjustable electromagnets. The slurry can be passed repeatedly through a separator with the magnetic field at a given strength and, once all the magnetic material has been exhaustively extracted at the field intensity, the electromagnet is adjusted so as to increase the magnetic field strength and the process repeated.

Alternatively, the slurry can be repeatedly passed through a first separator set to a lower intensity magnetic field, followed by repeatedly passing through a second separator set to a higher intensity magnetic field to achieve the exhaustive effect. A range of suitable magnetic separators are supplied by the Eriez Company of Erie, Pa, USA.

It may also be preferred for the magnetically treated fly ash obtained in step (c) to undergo a chemical treatment step. A preferred chemical treatment step can be carried out in the presence of a chelant, and preferably also in the presence of both a chelant and an acid. Preferred chelants may include ethylene diamine disuccinic acid (EDDS), ethylene diamine tetraacetic acid (EDTA), diethylene triamine pentaacetic acid (DTPA), ethylene diamine di(o-hydroxyphenylacetic acid) (EDDHA), 1-hydroxyethane 1,1 diphosphonic acid (HEDP), hydroxyethyl ethylenediamine triacetic acid (HEDTA), and any combination thereof.

During any chelant treatment step, typically the fly ash is contacted with a chelant. Typically, the fly ash and chelant are contacted together with water to form an aqueous slurry. The chelant treatment step can be carried out at an elevated temperature, such as a temperature greater than 50°C, or greater than 60°C, or even greater than 70°C. Typically, the liquid supernatant is removed. The remaining fly ash may be rinsed.

It may be preferred that during step (c) the magnetically treated fly ash is subjected to a calcining and/or sintering step.

It may be preferred that during step (c) the magnetically treated fly ash is subjected to a calcining step, typically at greater than 450°C, or even greater than 500°C, or greater than 600°C, or greater than 750°C, and typically up to 1000°C.

It may be preferred that during step (c) the magnetically treated fly ash is subjected to a sintering step, typically at greater than 1000°C, or even greater than 1100°C, or greater than 1200°C, or even greater than 1300°C. This sintering step may further improve the colour of the magnetically treated fly ash and/or reduce the leachability of materials such as heavy metal ions out of the magnetically treated fly ash.

### Step (d), milling

Step (d) subjects the magnetically treated fly ash obtained in step (c) to a milling step to form whitened fly ash.

In step (d), the magnetically treated fly ash obtained in step (c) is subjected to a milling step to obtain whitened fly ash. Step (d) can be a wet milling step or a dry milling step. Ball mills or vibrating rod mills are suitable equipment whether the milling step is a dry milling step or a wet milling step.

The wet milling step may be an acidic wet milling step wherein the magnetically treated fly ash obtained in step (c) is contacted with an acid and subjected to an acidic wet milling step. Suitable acids for use in step (d) may include mineral acids and/or organic acids.

Suitable acids for use in step (d) can be selected from acetic acid (ethanoic acid), ascorbic acid ((2R)-2-[(1S)-1,2-dihydroxyethyl]-3,4-dihydroxy-2H-furan-5-one), citric acid, hydrochloric acid, nitric acid, oxalic acid (ethandioic acid), sulphuric acid, and any combination thereof.

A preferred acid is sulphuric acid. Another preferred acid is hydrochloric acid.

Preferably, the acid used in step (d) has a molarity of from 0.2M to 3.0M, or from 0.5M to 2.5M, or even from 1.0M to 2.0M.

Preferably, step (d) is carried out at a pH of less than 6.0, or less than 5.0, or less than 4.0, or less than 3.0, or less than 2.0, or even less than 1.0.

The acidic wet milling step may also be carried out in the presence of a chelant. Suitable chelants are described above (chelants suitable for step (c)).

Step (d) may be carried out at an elevated temperature of 50°C or greater, or greater than 60°C, or even greater than 70°C.

Step (d) may have a duration of 90 minutes or less, such as from 10min to 90min, or from 20 minutes to 80 minutes, or even from 30 to 70 minutes.

Preferably, step (d) can be carried in a ball mill or a rod mill.

The wet milling step may preferably comprise a first acidic milling treatment step and a second acidic milling treatment step. The acid used in the first acidic milling treatment step can be same acid that is used in the second acidic milling treatment step, or different acids can be used. It may be preferred that the acid used in the second acidic milling treatment step has a higher molarity than the acid used in the first acidic milling treatment step. Preferably, the first acidic milling treatment step is carried out in the presence of hydrochloric acid. Preferably, the second acidic milling treatment step is carried out in the presence of oxalic acid.

Preferably, step (d) is carried out at a pH of less than 6.0, or less than 5.0, or less than 4.0, or less than 3.0, or less than 2.0, or even less than 1.0.

Step (d) may be carried out under a pressure that is greater than atmospheric pressure. Step (d) may be carried out at a temperature of greater than 100°C, such as greater than 125°C, or up to 150°C.

It may be preferred that during step (d) the milled magnetically treated fly ash is subjected to a calcining step, typically at greater than 450°C, or even greater than 500°C, or greater than 600°C, or greater than 750°C, and typically up to 1000°C.

It may be preferred that during step (d) the milled magnetically treated fly ash is subjected to a sintering step, typically at greater than 1000°C, or even greater than 1100°C, or greater than 1200°C, or even greater than 1300°C. This sintering step may further improve the colour of the magnetically treated fly ash and/or reduce the leachability of materials such as heavy metal ions out of the magnetically treated fly ash. The sintered fly ash may be further milled.

### Embodiments of the present invention

1. A white paint composition, wherein the composition comprises:
   (a) from 3wt% to 35wt% fly ash;
   (b) from 1wt% to 30wt% TiO₂;
   (c) from 20wt% to 50wt% solvent; and
   (d) from 10wt% to 30wt% polymeric binder material,
      wherein the fly ash has a dso particle size of less than 4.0µm.
2. A composition according to embodiment 1, wherein the solvent is water, the polymeric binder material is a carboxylate polymer, and wherein the paint is an emulsion paint.
3. A composition according to embodiment 1, wherein the solvent is an aliphatic hydrocarbon and the polymeric binder material is an alkyd resin.
4. A composition according to embodiment 1, wherein the weight ratio of fly ash to TiO₂ is in the range of from 2:1 to 30:1.
5. A composition according to any preceding embodiment, wherein the fly ash has an oil adsorption of less than 40 cc/100g.
6. A composition according to any preceding embodiment, wherein the fly ash comprises less than 1.5wt% Fe₂O₃.
7. A composition according to any preceding embodiment, wherein the fly ash comprises less than 1.5wt% CaO.
8. A composition according to any preceding embodiment, wherein the fly ash has a zeta potential of from -20mV to -60mV.
9. A composition according to any preceding embodiment, wherein the composition comprises 15wt% to 30wt% carboxylate polymer.
10. A composition according to embodiment 9, wherein the carboxylate polymer is polyacrylic acid or a derivative thereof.
11. A composition according to any preceding embodiment, wherein the composition comprises from 20wt% to 35wt% fly ash.
12. A composition according to any preceding embodiment, wherein the composition comprises from 1wt% to 8wt% TiO₂.
13. A composition according to any preceding embodiment, wherein the weight ratio of fly ash to TiO₂ is in the range of from 2:1 to 4:1.
14. A composition according to any preceding embodiment, wherein the composition has a viscosity in the range of from 400 cP to 1500 cP.
15. A composition according to any preceding embodiment, wherein the composition has a hiding power to contrast ratio of greater than 99.0.

### Examples

### Method to prepare fly ash

Fly ash was prepared as follows.

The starting PCC fly ash had a whiteness value of 25 as per ISO 3688.

200g of PCC fly ash, sieved to between 44µm and 250µm, was added to 2000g of water and stirred to make a slurry.

The slurry was then subjected to an exhaustive magnetic extraction and purification step as follows. A 1000 Gauss bar magnet was manually and repeatedly passed through the slurry to collect any magnetic particles and periodically wiped clean. This was continued until no further magnetic particles could be seen collecting on the surface of the magnet. Then the process was repeated with a 3000 Gauss bar magnet and finally repeated with a high intensity 8000 Gauss bar magnet being used.

After the magnetic extraction step, the slurry was allowed to settle, and the supernatant liquid poured off. The treated fly ash was then dried in an oven at 110°C for 1 hr.

Next, 150g of the treated fly ash was placed in a ball mill container (to fit MITR model YXQM-8L) along with 150g of 1.0M sulfuric acid. About 1250g of alumina grinding balls were also placed in the container. The alumina balls (density 3.95 g/ml) had the following size distribution: 5 mm (50%wt), 10 mm (32%wt), 20 mm (18%wt).

The slurry was then milled at 180rpm for 60min in a planetary ball mill (MITR model YXQM-8L). At the end of the run the slurry was found to be at ~80°C.

After milling, the slurry was centrifuged, and supernatant liquid was poured off. The solid was rinsed by adding 300g of water to the solid with stirring followed by centrifugation and removal of the liquid. This rinsing step was repeated three times. The wet solid was then dried to constant weight at 110°C.

The dried solid was then calcined by placing it in an oven at 1250°C for 0.5 hour. The whitened fly ash had a whiteness value of greater than 86 according to ISO 3688.

The fly ash had a dso particle size of less than 4.0µm.

### Paint Sample Preparation and Characterisation

Model eggshell paint compositions containing different proportions of TiO₂ pigment and fly ash were prepared as follows.

The fly ash used had a dso particle size of 1.56 microns and a d₉₀ of 3.36 microns. The material had an oil adsorption value of 33.5 g oil/100 g. The Fe₂O₃ level was 0.33 wt% and the CaO level was 0.1 wt %. When dispersed in water, the zeta potential was -37.91 mV.

Grind Stage mixes containing the TiO₂ (Ti-Pur R-906) and fly ash were prepared as below. The combined proportion of TiO₂ and fly ash was kept constant at 73.4% of the Grind Stage mix and the ratio of TiO₂to fly ash was varied.

A common Let Down Stage mixes was prepared containing an aqueous styrene-acrylic emulsion latex (Carboset CR-3090) and other additives. Then the Let Down Stage mixes were added to the Grind Stage mixes to create a series of paint compositions having the same composition, including the combined total of fly ash and TiO₂, but with different ratios of fly ash to TiO₂ pigment.

### Grind Stage Mix

| | **wt (g)** | **% of batch** |
|---|---|---|
| **Water** | 177.8 | 20.4 |
| **Bentone LT** | 1.9 | 0.2 |
| **Additol XW 6588** | 18.1 | 2.1 |
| **Zetasperse 3600** | 2.9 | 0.3 |
| **BYK 024** | 2.9 | 0.3 |
| **Propylene Glycol** | 14.3 | 1.6 |
| **Texanol** | 14.3 | 1.6 |
| **Combined TiO₂ pigment and fly ash** | 641.2 | 73.4 |

A range of different Grind Stage mixes were prepared by milling and then each mix was combined with a Let Down Stage mixes using a Dipermat high-speed disperser to a Hegman gauge fineness of 5.5 - 6.0. The Let Down Stage mix was prepared by blending the following materials.

### Let Down Stage

| | **wt (g)** | **% of batch** |
|---|---|---|
| **Water** | 112.1 | 10.9 |
| **Styrene-acrylic emulsion (Carboset CR-3090)** | 866.8 | 84.4 |
| **AMP 95** | 4.5 | 0.4 |
| **Propylene Glycol** | 12.7 | 1.2 |
| **Dowanol DPnB** | 15.7 | 1.5 |
| **Texanol** | 1.1 | 0.1 |
| **Ascotran H14** | 9.4 | 0.9 |
| **Acrysol RM 8W** | 4.3 | 0.4 |

Each Grind Stage mix was then combined with a Let Down Stage mix to give a range of paint mixes (A to C) having the composition below and differing solely in the ratio of TiO₂ to fly ash but to a constant combined total of fly ash plus TiO₂.

| **Material** | **A** | **B** | **c** |
|---|---|---|---|
| **(added) Water** | 15.26 | 15.26 | 15.26 |
| **Bentone LT** | 0.10 | 0.10 | 0.10 |
| **Additol XW 6588** | 0.95 | 0.95 | 0.95 |
| **Zetasperse 3600** | 0.15 | 0.15 | 0.15 |
| **BYK 024** | 0.15 | 0.15 | 0.15 |
| **Propylene Glycol** | 0.75 | 0.75 | 0.75 |
| **Texanol** | 0.75 | 0.75 | 0.75 |
| **TiO₂** | 33.75 | 6.75 | 0 |
| **Fly Ash** | 0 | 27 | 33.75 |
| **Styrene-acrylic emulsion (Carboset CR-3090)** | 45.62 | 45.62 | 45.62 |
| **AMP 95** | 0.24 | 0.24 | 0.24 |
| **Propylene Glycol** | 0.67 | 0.67 | 0.67 |
| **Dowanol DPnB** | 0.83 | 0.83 | 0.83 |
| **Texanol** | 0.06 | 0.06 | 0.06 |
| **Ascotran H14** | 0.50 | 0.50 | 0.50 |
| **Acrysol RM 8W** | 0.22 | 0.22 | 0.22 |

Due to the Carboset CR-3090 styrene-acrylic emulsion having a solids content of 45% (quite typical for this type of latex emulsion) and some of the additives being liquids, the total solids content of every mix was 56.5%. The mixes had pH values between 9.1 and 9.2.

The mixes were tested for a variety of properties and had the following results.

### 1 - Contrast Ratio

| **Mix ID** | **% TiO₂ in Mix** | **% Fly Ash in Mix** | **Contrast Ratio** |
|---|---|---|---|
| | | | |
| **A (comparative)** | 33.75 | 0 | 99.4 |
| **B (inventive)** | 6.75 | 27 | 99.5 |
| **C (comparative)** | 0 | 33.75 | 43.1 |

This shows that blends of fly ash and TiO₂ can have equal contrast ratios (hence opacity) to pure TiO₂.

### 2 - Wet Scrub Test (resistance to abrasion)

| **Mix ID** | **% TiO₂ in Mix** | **% Fly Ash in Mix** | **Wet Scrub test - No of Cycles before Failure ASTM D2486** |
|---|---|---|---|
| | | | |
| **A** | 33.75 | 0 | 250 |
| **B** | 6.75 | 27 | 1450 |
| **c** | 0 | 33.75 | 1900 |

This shows that the inclusion of fly ash has significant benefits for physical abrasion compared to pure TiO₂.

### 3 - Dry Rub Tests

The benefits of TiO₂/fly ash blends were also shown in dry abrasion testing using the Taber abrasion test (ASTM D4060). The test measures the amount of material lost from a painted surface after a fixed number of rubbing cycles. Results are all low (materials are very abrasion resistant) but there is a benefit to using blends of TiO₂ and fly ash.

Taber abrasion ASTM D4060 (100 cycles, CR17 wheels, 1000g weight)

| **Mix ID** | **% TiO2 in Mix** | **% Fly Ash in Mix** | **Weight loss after 100 cycles (mg)** |
|---|---|---|---|
| | | | |
| **A** | 33.75 | 0 | 21.4 |
| **B** | 6.75 | 27 | 18.2 |
| **c** | 0 | 33.75 | 21.9 |

### 4 - Colour characterisation of 50 micron thick films

The tests show that blends of TiO₂ and fly ash have colour properties suitable for use in white paints.

| **Mix ID** | **% TiO₂ in Mix** | **% Fly Ash in Mix** | **L*** | **a^{∗}** | **b^{∗}** |
|---|---|---|---|---|---|
| | | | | | |
| **A** | 33.75 | 0 | 98 | -0.7 | 0.6 |
| **B** | 6.75 | 27 | 84.2 | -0.6 | -1.3 |
| **c** | 0 | 33.75 | 61.8 | 0.2 | 4.0 |

## Claims

1. A white paint composition, wherein the composition comprises:
(a) from 3wt% to 35wt% fly ash;
(b) from 1wt% to 30wt% TiO₂;
(c) from 20wt% to 50wt% solvent; and
(d) from 10wt% to 30wt% polymeric binder material.
wherein the fly ash has a dso particle size of less than 4.0µm.

2. A composition according to claim 1, wherein the solvent is water, the polymeric binder material is a carboxylate polymer, and wherein the paint is an emulsion paint.

3. A composition according to claim 1, wherein the solvent is an aliphatic hydrocarbon and the polymeric binder material is an alkyd resin.

4. A composition according to claim 1, wherein the weight ratio of fly ash to TiO₂ is in the range of from 2:1 to 30:1.

5. A composition according to any preceding claim, wherein the fly ash has an oil adsorption of less than 40 cc/100g.

6. A composition according to any preceding claim, wherein the fly ash comprises less than 1.5wt% Fe₂O₃.

7. A composition according to any preceding claim, wherein the fly ash comprises less than 1.5wt% CaO.

8. A composition according to any preceding claim, wherein the fly ash has a zeta potential of from -20mV to -60mV.

9. A composition according to any preceding claim, wherein the composition comprises 15wt% to 30wt% carboxylate polymer.

10. A composition according to claim 9, wherein the carboxylate polymer is polyacrylic acid or a derivative thereof.

11. A composition according to any preceding claim, wherein the composition comprises from 20wt% to 35wt% fly ash.

12. A composition according to any preceding claim, wherein the composition comprises from 1wt% to 8wt% TiO₂.

13. A composition according to any preceding claim, wherein the weight ratio of fly ash to TiO₂ is in the range of from 2:1 to 4:1.

14. A composition according to any preceding claim, wherein the composition has a viscosity in the range of from 400 cP to 1500 cP.

15. A composition according to any preceding claim, wherein the composition has a hiding power to contrast ratio of greater than 99.0.
